# EUROPEAN PATENT SPECIFICATION

(11) **EP 1 840 367 B1**
(45) Date of publication and mention of the grant of the patent: **03.11.2010**
(21) Application number: 06425210.9
(22) Date of filing: 29.03.2006
(51) Int. Cl.: F02M 59/44, F02M 59/46, F16J 15/08

(54) **High-pressure fuel pump provided with sealing ring**
Hochdruckkraftstoffpumpe mit Dichtring
Pompe de carburant haute pression avec joint d'étanchéité

(43) Date of publication of application: 03.10.2007
(73) Proprietor: Centro Studi Componenti per Veicoli S.P.A., 70026 Modugno (IT)
(72) Inventor: Grimaldi, Antonio, 70126 Bari (IT); Scotto Di Santolo, Pietro, 80079 Procida (IT); Fiorentino, Luigi, 70126 Bari (IT)
(74) Representative: Jorio, Paolo

(56) References cited:
- EP-A- 0 192 015
- EP-A- 0 459 510
- EP-A- 1 348 868
- FR-A- 522 164
- FR-A- 2 524 113
- US-A- 4 810 591
- US-A- 5 921 559
- US-A1- 2004 012 157

## Description

The present invention refers to a high-pressure fuel pump provided with a sealing ring.

The high-pressure fuel pump is part of high-pressure fuel system, which defines a high-pressure fuel circuit of a Diesel engine and comprises, in addition to the high-pressure fuel pump, a rail pipe, and a number of injectors.

The high-pressure fuel pump is a piston pump and comprises a number of pistons, wherein each piston is reciprocated inside a cylinder having an exit port in communication with a delivery duct formed in the high-pressure fuel pump. Each piston feeds the fuel at high pressure, generally at 1600 bar, through the delivery duct and, then, through the rail-pipe to the inlet fittings of the fuel injectors.

In general, feeding high-pressure fuel to the injectors has radically improved the performances and reduced the fuel consumption of Diesel engines. Further to the above results, Diesel system development aims to further increase the operating pressure of the fuel in order to maximise the advantages of this technology known as "common rail". However, the fuel high pressure severely stresses the high-pressure pump, in particular, at the junctions between metallic bodies joined together to form the high-pressure pump. For example, a high-pressure fuel pump comprises a pump housing provided with a first hole and a cylinder-head provided with a second hole; the pump housing and the cylinder-head are joined one another so as to define a duct for feeding high-pressure fuel and formed, at least in part, by the first an second holes; and so as to clamp a sealing ring in between for preventing leakage of the fuel flowing through the duct.

The sealing rings currently in use are of the type comprising an anti-extrusion steel ring and annular rubber gaskets joined to the anti-extrusion steel ring. This type of sealing rings proved not to be efficient in preventing fuel leakage for those Diesel engines that operate in areas, in which the temperature may be about 30 deg. C below zero or even lower. Under the above-identified severe climatic conditions, the metallic components forming the high-pressure fuel pump are subjected to relevant variations of their physical characteristics due to the thermal excursion between - 30 deg. C and 120 deg. C, which is the common temperature of high-pressure fuel pump when the engine is in operating conditions. In particular, the sealing rings currently in use cannot prevent the fuel to leakage from the junctions when the temperature is extremely low.

An example of metal-rubber sealing ring employed in a different technical field is shown in document US 5,921,559.

Document EP 1,348,868 Al teaches to use a sealing ring made of aluminium alloy in the field of Diesel engine high-pressure pump. In general, aluminium sealing ring are known since long time for example from FR 522,164. A particular type of aluminium sealing ring is disclosed in EP 0192,015. This sealing ring is provided with two diverging elastic legs that are deformed when compressed between two opposite bodies so that the peak of pressure is exerted at the free ends of the elastic legs. Beside the fact that the shape of sealing ring is rather complicated and expensive to manufacture with the required finishing parameter and is not fully reliable in term of duration, the sealing ring disclosed in EP 192,015 is unsuitable to operate at low temperature

It is an object of the invention to provide a high-pressure fuel pump, which is highly reliable and cheap to produce, to eliminate the aforementioned drawbacks and, in particular, is suitable to prevent leakage of fuel in each condition.

According to the present invention, there is provided a high-pressure fuel pump for feeding high-pressure fuel' to the injectors of a Diesel engine; the high-pressure fuel pump comprising a first metallic body, for example a pump housing, having a first hole; and a second metallic body, for example a cylinder-head, having a second hole; and a sealing ring; said first and second metallic bodies being joined one another so as to define a duct, which is suitable for feeding high-pressure fuel, and is formed, at least in part, by said first and second holes; and so as to clamp the sealing ring in between for preventing leakage of the high-pressure fuel flowing through the duct; the sealing ring is made of a material selected from aluminium-based alloys and having a first even surface in contact with said first metallic body and second even surface in contact with said second metallic body; the high-pressure fuel pump being **characterized in that** the sealing ring is provided with a first inner bevelled surface adjacent to said first even surface and second inner bevelled surface adjacent to said second even surface; wherein the first and second inner bevelled surfaces are small in size with respect to the respective first and second even surfaces so as to control local plastic deformation of the sealing ring at edges formed with the first and the second even surfaces.

The first and second inner bevelled surfaces have two main functions: the first function consists in reaching a peak of pressure at the inner diameter of the sealing ring, and the second function consists in preventing the erosion of the sealing ring. The second function can be achieved by the fact that the bevelled design has proved to be effective to control the local deformation of the inner side of the sealing ring and, thus, limit the turbulent flow at the inner diameter of the sealing ring.

The selection from aluminium-based alloys, in particular from aluminium-based alloys comprising copper up to 4.9. % by weight and magnesium up to 1,8 % by weight, has proved to be effective for any operating and climatic conditions.

According to an embodiment of the present invention, the sealing ring is made in one piece and of a single material.

This embodiment makes particularly cheap to produce the sealing ring and contributes to reduce the cost of the entire high-pressure fuel pump.

According to a further embodiment the sealing ring extends about an axis and has an equatorial plane perpendicular to said axis; the sealing ring having mirror symmetry with respect to the equatorial plane.

This further feature simplifies the assembling of the high-pressure pump.

A preferred, non-limiting embodiment of the invention will be described by way of example with reference to the accompanying drawings, in which:
FIG. 1 shows a section, with parts removed for clarity, of a high-pressure fuel pump in accordance with the present invention;
FIG. 2 shows a lateral view, with parts in section and parts removed for clarity, of a sealing ring of the high-pressure fuel pump of figure 1; and
FIG. 3 shows a diagram of the pressure along the contact surface between the sealing ring and one metallic body of the high-pressure fuel pump of figure 1.

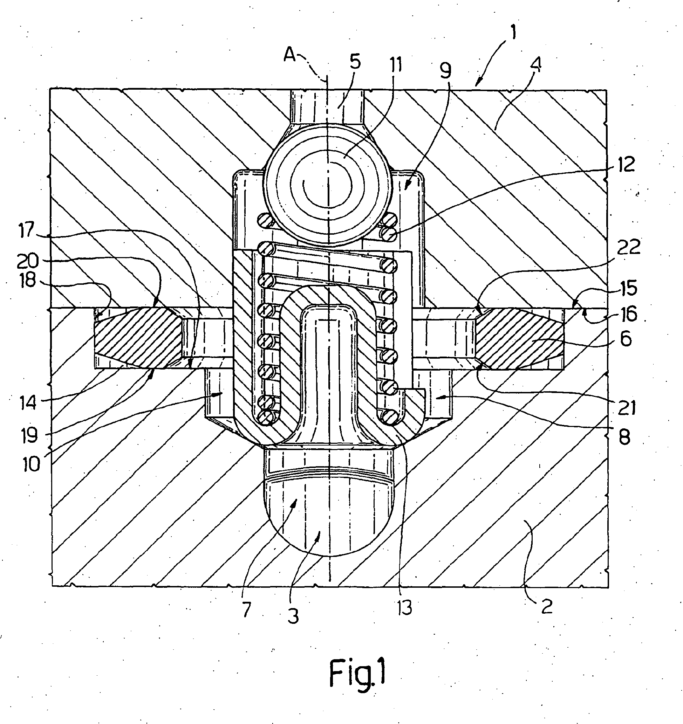

Number 1 in FIG. 1 indicates as a whole a Diesel engine high-pressure fuel pump for delivering fuel up to a pressure over 1800 bar to fuel injectors (not shown). The fuel pump 1 comprises a metallic body 2 provided with a hole 3 for fuel passage; a metallic body 4 provided with a hole 5 for fuel passage; and a sealing ring 6 clamped between metallic bodies 2 and 4. In the example shown in figure 1, metallic body 2 is a pump housing of a high-pressure piston pump, whereas metallic body 4 is a cylinder head of the high-pressure piston pump joined to pump housing in known manner and not shown in the enclosed figures. Holes 3 and 5 are arranged so as to form a duct 7 extending through metallic bodies 2 and 4 and defining the so-called "delivery duct" of the high-pressure piston pump. Holes 3 and 5 enlarge in respective recesses 8 and 9 that house a delivery valve 10, which operates in known manner and comprises a shutter 11, a helical spring 12, and a guide member 13 for the helical spring 12.

Metallic body 2 has an additional recess 14 housing the sealing ring 6 that extend about an axis A and about duct 7 at the junction of metallic bodies 2 and 4. Metallic bodies 2 and 4 comprise respective surfaces 15 and 16 that are pressed one against the other by known fastening means not shown in the enclosed drawings. Recess 14 is delimited by a surface 17 and a surface 18 perpendicular to surface 17. Sealing ring 6 is clamped between the surface 17 of metallic body 2 and the surface 16 of metallic body 4.

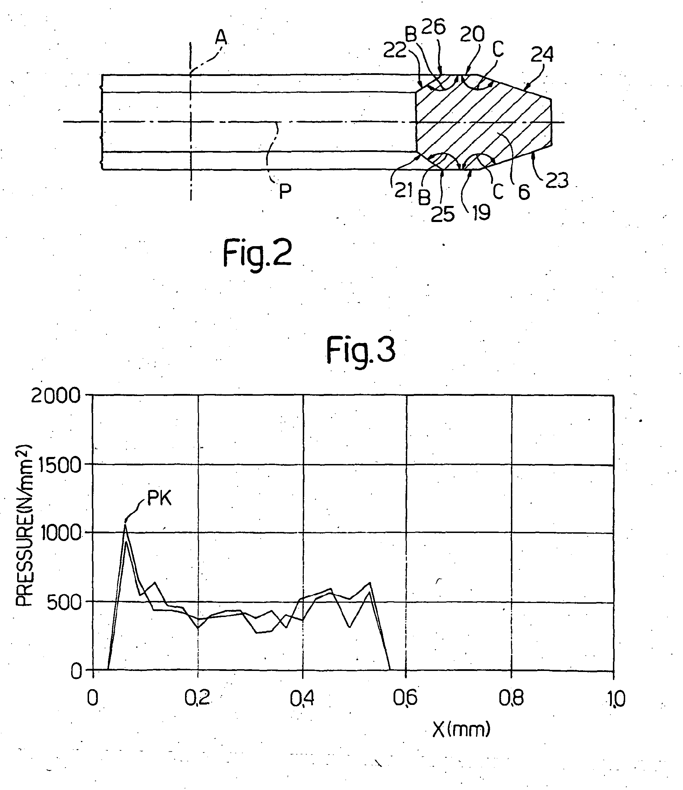

With reference to figure 2, sealing ring 6 extends along an equatorial plane P perpendicular to axis A and has mirror symmetry with respect to the equatorial plane P. Sealing ring 6 is made of a material selected from aluminium-based alloys. In particular, the material is selected from aluminium-based alloys comprising copper up to 4.9 % by weight and magnesium up to 1,8 % by weight. In accordance with a preferred embodiment, the aluminium-based alloy is EN AW-A1 Cu4Mg1 according to DIN EN 573. The definition "aluminium-based alloys" encompasses those aluminium alloys containing prevalently aluminium.

The selected material is provided with sufficient elasticity to compensate the dimensional variations due to the thermal excursion and to prevent fuel leakage in any operating and climatic conditions.

The sealing ring 6 is made in one piece and of a single material and has a first even surface 19 in contact with metallic body 2 and second even surface 20 in contact with metallic body 4. The first and second even surfaces 19 and 20 are annular in shape and are of the same size. Sealing ring 6 is provided with a first inner bevelled surface 21 adjacent to said first even surface 19 and second inner bevelled surface 22 adjacent to said second even surface 20. The first and second inner bevelled surfaces 21 and 22 forms an angle B comprised between 100° and 140° and preferably between 122° and 124° respectively with said first and second even surfaces 19 and 20.

Sealing ring 6 is further provided with a first outer bevelled surface 23 adjacent to said first even surface 19 and second outer bevelled surface 24 adjacent to said second even surface 20. The first and second outer bevelled surfaces 23 and 24 forms an angle C comprised between 110° and 150° and preferably between 134° and 136° respectively with said first and second even surfaces 19 and 20. In general, the sealing ring 6 has a polygonal cross section. In the example shown the cross section of sealing ring 6 has an octagonal shape. As to the shape of the cross section of the sealing ring 6, the first and second inner bevelled surfaces 21 and 22 improve the sealing performances of the sealing ring 6. The first and second inner bevelled surfaces 21 and 22 are small in size with respect to the remaining surfaces, in particular with respect to the first and second even surfaces 19 and 20, and control the local plastic deformation of the sealing ring 6 at the edges 25 and 26 formed with the first and the second even surfaces 19 and 20.

With reference to Figure 3, the diagram shows in ordinate the pressure exchanged between the first even surface 19 and the surface 17 of metallic body 2 (respectively exchanged between the second even surface 20 and surface 16 of metallic body 4). In the abscissa is reported the radial dimension of the first (second) even surface 19 (20). The zero in abscissa corresponds to the edge 25 or 26. The tests carried out by the applicant have shown that the peak PK of the pressure exchanged is closed to the edges 25 and 26. This fact is mainly due to the effect of the first and second inner bevelled surfaces 21 and 22 that control and limit local plastic deformation on the inner portion of the sealing ring 6. As a consequence the turbulent flow in proximity of the sealing ring 6 is limited within acceptable values.

## Claims

1. High-pressure fuel pump for feeding high-pressure fuel to the injectors of a Diesel engine; the high-pressure fuel pump (1) comprising a first metallic body (2), for example a pump housing, having a first hole (3); and a second metallic body (4), for example a cylinder-head, having a second hole (5); and a sealing' ring (6); said first and second metallic bodies (2, 4) being joined one another so as to define a duct (7), which is suitable for feeding high-pressure fuel and is formed, at least in part, by said first and second holes (3, 5); and so as to clamp the sealing ring (6) in between for preventing leakage of the high-pressure fuel flowing through the duct (7); the sealing ring (6) is made of a material selected from aluminium-based alloys and having a first even surface (19) in contact with said first metallic body (2) and second even surface (20) in contact with said second metallic body (4); the high-pressure fuel pump (1) being **characterized in that** the sealing ring (6) is provided with a first inner bevelled surface (21) adjacent to said first even surface (19) and second inner bevelled surface (22) adjacent to said second even surface (20); wherein the first and second inner bevelled surfaces (21, 22) are small in size with respect to the respective first and second even surfaces (19, 20) so as to control local plastic deformation of the sealing ring (6) at edges (25; 26) formed with the first and the second even surfaces (19, 20).

2. High-pressure fuel pump according to claim 1, **characterised in that** said material is selected from aluminium-based alloys comprising copper up to 4.9 % by weight and magnesium up to 1,8 % by weight.

3. High-pressure fuel pump according to claim 1, or 2, **characterized in that** said sealing ring (6) is made in one piece and of a single material.

4. High-pressure fuel pump according to any one of the foregoing claims, **characterized in that** the sealing ring (6) extends about an axis (A) and has an equatorial plane .(P) perpendicular to said axis (A); the sealing ring (8) having a mirror symmetry with respect to the equatorial plane .(P).

5. High-pressure fuel pump according to any one of the foregoing claims, **characterized in that** each one of said first and second inner bevelled surfaces (21, 22) forms an angle (B) comprised between 100 deg. and 140 deg. , preferably, between 122 deg. and 124 deg. respectively with said first and second even surfaces (19, 20).

6. High-pressure fuel pump according to anyone of the foregoing claims, **characterized in that** the sealing ring (6) is provided with a first outer bevelled surface (23) adjacent to said first even surface (19) and second outer bevelled surface (24) adjacent to said second even surface (20).

7. High-pressure fuel pump according to claim 6, **characterized in that** each one of said first and second outer bevelled surfaces (23, 24) forms an angle (C) comprised between 110 deg. and 150 deg. , in particular, between 134 deg. and 136 deg. respectively with said first and second even surfaces (19, 20).

8. High-pressure fuel pump according to anyone of the foregoing claims, **characterized in that** the sealing ring (6) has a polygonal cross section.

9. High-pressure fuel pump rail according to anyone of the foregoing claims, **characterized in that** the sealing ring (6) has an octagonal cross section.

## Patentansprüche

1. Hochdruckkraftstoffpumpe zur Zuführung von Hochdruckkraftstoff zu den Einspritzdüsen eines Dieselmotors; wobei die Hochdruckkraftstoffpumpe (1) aufweist: einen ersten Metallkörper (2), zum Beispiel ein Pumpengehäuse, mit einem ersten Loch (3); und einen zweiten Metallkörper (4), zum Beispiel einen Zylinderkopf, mit einem zweiten Loch (5); und einen Dichtungsring (6); wobei die ersten und zweiten Metallkörper (2, 4) miteinander verbunden sind, um einen Kanal (7) zu definieren, der zur Zuführung von Hochdruckkraftstoff geeignet und mindestens teilweise durch die ersten und zweiten Löcher (3, 5) gebildet wird; und um den Dichtungsring (6) dazwischen einzuklemmen, um einen Austritt des Hochdruckkraftstoffs zu verhindern, der durch den Kanal (7) strömt; wobei der Dichtungsring (6) aus einem Material besteht, das aus auf Aluminium beruhenden Legierungen ausgewählt ist, und eine erste ebene Oberfläche (19), die mit dem ersten Metallkörper (2) in Kontakt steht, und eine zweite ebene Oberfläche (20) aufweist, die mit dem zweiten Metallkörper (4) in Kontakt steht; wobei die Hochdruckkraftstoffpumpe (1) **dadurch gekennzeichnet ist, daß** der Dichtungsring (6) benachbart zur ersten ebenen Oberfläche (19) mit einer ersten inneren abgeschrägten Oberfläche (21) und benachbart zur zweiten ebenen Oberfläche (20) mit einer zweiten inneren abgeschrägten Oberfläche (22) versehen ist; wobei die ersten und zweiten inneren abgeschrägten Oberflächen (21, 22) bezüglich der jeweiligen ersten und zweiten ebenen Oberflächen (19, 20) eine kleine Abmessung aufweisen, um eine lokale plastische Verformung des Dichtungsrings (6) an den Kanten (25; 26) zu kontrollieren, die mit den ersten und zweiten ebenen Oberflächen (19, 20) ausgebildet sind.

2. Hochdruckkraftstoffpumpe nach Anspruch 1, **dadurch gekennzeichnet, daß** das Material aus auf Aluminium beruhenden Legierungen ausgewählt ist, die bis zu 4,9 Gew.% Kupfer und bis zu 1,8 Gew.% Magnesium aufweisen.

3. Hochdruckkraftstoffpumpe nach Anspruch 1 oder 2, **dadurch gekennzeichnet, daß** der Dichtungsring (6) in einem Stück und aus einem einzigen Material hergestellt ist.

4. Hochdruckkraftstoffpumpe nach einem der vorhergehenden Ansprüche, **dadurch gekennzeichnet, daß** sich der Dichtungsring (6) um eine Achse (A) erstreckt und eine zur Achse (A) senkrechte Äquatorialebene (P) aufweist; wobei der Dichtungsring (8) bezüglich der Äquatorialebene (P) eine Spiegelsymmetrie aufweist.

5. Hochdruckkraftstoffpumpe nach einem der vorhergehenden Ansprüche, **dadurch gekennzeichnet, daß** jede der ersten und zweiten inneren abgeschrägten Oberflächen (21, 22) mit der ersten bzw. zweiten ebenen Oberfläche (19, 20) einen Winkel (B) bildet, der zwischen 100 Grad und 140 Grad und vorzugsweise zwischen 122 Grad und 124 Grad liegt.

6. Hochdruckkraftstoffpumpe nach einem der vorhergehenden Ansprüche, **dadurch gekennzeichnet, daß** der Dichtungsring (6) benachbart zur ersten ebenen Oberfläche (19) mit einer ersten äußeren abgeschrägten Oberfläche (23) und benachbart zur zweiten ebenen Oberfläche (20) mit einer zweiten äußeren abgeschrägten Oberfläche (24) versehen ist.

7. Hochdruckkraftstoffpumpe nach Anspruch 6, **dadurch gekennzeichnet, daß** jede der ersten und zweiten äußeren abgeschrägten Oberflächen (23, 24) mit der ersten bzw. zweiten ebenen Oberfläche (19, 20) einen Winkel (C) bildet, der zwischen 110 Grad und 150 Grad und insbesondere zwischen 134 Grad und 136 Grad liegt.

8. Hochdruckkraftstoffpumpe nach einem der vorhergehenden Ansprüche, **dadurch gekennzeichnet, daß** der Dichtungsring (6) einen vieleckigen Querschnitt aufweist.

9. Leitung einer Hochdruckkraftstoffpumpe nach einem der vorhergehenden Ansprüche, **dadurch gekennzeichnet, daß** der Dichtungsring (6) einen achteckigen Querschnitt aufweist.

## Revendications

1. Pompe à carburant haute pression pour alimenter du carburant haute pression aux injecteurs d'un moteur Diesel ; la pompe à carburant haute pression (1) comprenant un premier corps métallique (2), par exemple un carter de pompe, pourvu d'un premier trou (3) ; et un second corps métallique (4), par exemple une culasse, pourvue d'un second trou (5) ; et une bague d'étanchéité (6) ; lesdits premier et second corps métalliques (2, 4) étant réunis entre eux de manière à définir un conduit (7) apte à alimenter du carburant haute pression et formé, au moins en partie, par lesdits premier et second trous (3, 5) ; et de manière à serrer entre eux la bague d'étanchéité (6) pour empêcher la fuite du carburant haute pression s'écoulant à travers le conduit (7) ; la bague d'étanchéité (6) est constituée d'un matériau choisi parmi des alliages à base d'aluminium et présente une première surface plane (19) en contact avec ledit premier corps métallique (2) et une seconde surface plane (20) en contact avec ledit second corps métallique (4) ; la pompe à carburant haute pression (1) étant **caractérisée en ce que** la bague d'étanchéité (6) est munie d'une première surface intérieure en biseau (21) adjacente à ladite première surface plane (19) et une seconde surface intérieure en biseau (22) adjacente à ladite seconde surface plane (20) ; les première et seconde surfaces intérieures en biseau (21, 22) étant de petite dimension par rapport aux première et seconde surfaces planes respectives (19, 20) de façon à commander une déformation plastique locale de la bague d'étanchéité (6) au niveau des bords (25 ; 26) constitués des première et seconde surfaces planes (19, 20).

2. Pompe à carburant haute pression selon la revendication 1, **caractérisée en ce que** ledit matériau est choisi parmi des alliages à base d'aluminium comprenant du cuivre jusqu'à 4,9 % en poids et du magnésium jusqu'à 1,8 % en poids.

3. Pompe à carburant haute pression selon la revendication 1, ou 2, **caractérisée en ce que** ladite bague d'étanchéité (6) est réalisée d'une seule pièce et dans un seul matériau.

4. Pompe à carburant haute pression selon l'une quelconque des revendications précédentes, **caractérisée en ce que** la bague d'étanchéité (6) s'étend autour d'un axe (A) et présente un plan équatorial (P) perpendiculaire audit axe (A) ; la bague d'étanchéité (6) étant en symétrie miroir par rapport au plan équatorial (P).

5. Pompe à carburant haute pression selon l'une quelconque des revendications précédentes, **caractérisée en ce que** chacune desdites première et seconde surfaces intérieures en biseau (21, 22) forme un angle (B) compris entre 100 degrés et 140 degrés, de préférence entre 122 degrés et 124 degrés, respectivement avec lesdites première et seconde surfaces planes (19, 20).

6. Pompe à carburant haute pression selon l'une quelconque des revendications précédentes, **caractérisée en ce que** la bague d'étanchéité (6) est pourvue d'une première surface extérieure en biseau (23) adjacente à ladite première surface plane (19) et une seconde surface extérieure en biseau (24) adjacente à ladite seconde surface plane (20).

7. Pompe à carburant haute pression selon la revendication 6, **caractérisée en ce que** chacune de ladite première et seconde surface extérieure en biseau (23, 24) forme un angle (C) compris entre 110 degrés et 150 degrés, en particulier entre 134 degrés et 136 degrés, respectivement avec lesdites première et seconde surfaces planes (19, 20).

8. Pompe à carburant haute pression selon l'une quelconque des revendications précédentes, **caractérisée en ce que** la bague d'étanchéité (6) présente une section transversale polygonale.

9. Pompe à carburant haute pression selon l'une quelconque des revendications précédentes, **caractérisée en ce que en ce que** la bague d'étanchéité (6) présente une section transversale octogonale.
